# EUROPEAN PATENT SPECIFICATION

(11) **EP 3 208 593 B1**
(45) Date of publication and mention of the grant of the patent: **10.11.2021**
(21) Application number: 17153897.8
(22) Date of filing: 31.01.2017
(51) Int. Cl.: G01M 11/08

(54) **OPTICAL MONITORING SYSTEM AND METHOD FOR IMAGING A COMPONENT UNDER TEST**
OPTISCHES ÜBERWACHUNGSSYSTEM UND VERFAHREN ZUR BILDGEBUNG EINER ZU TESTENDEN KOMPONENTE
SYSTÈME DE SURVEILLANCE OPTIQUE ET PROCÉDÉ D'IMAGERIE D'UN COMPOSANT SOUS ESSAI

(30) Priority: 18.02.2016 US 201615046513
(43) Date of publication of application: 23.08.2017
(73) Proprietor: The Boeing Company, Chicago, IL 60606-2016 (US)
(72) Inventor: GROSSNICKLE, James A, Chicago, IL 60606-2016 (US); MCCRARY, Kevin Earl, Chicago, IL 60606-2016 (US); MOSEN, Gregory R, Chicago, IL 60606-2016 (US)
(74) Representative: Boult Wade Tennant LLP

(56) References cited:
- WO-A2-01/65861
- US-A1- 2002 034 324

## Description

### FIELD OF THE DISCLOSURE

Embodiments of the present disclosure generally relate to optical monitoring systems and methods of imaging a component that is being tested, such as a landing gear that is configured to be used with an aircraft.

### BACKGROUND OF THE DISCLOSURE

During development of aircraft, structural loads exerted into and on various components, such as landing gear and flight control surfaces, are monitored. For example, tests are performed in which forces are exerted onto various components of the aircraft, such as the landing gear and flight control surfaces (for example, ailerons, flaperons, elevators, rudders). During the tests, the reactions of the components to the exerted forces are monitored. The forces and component reactions are monitored to determine aircraft safety and performance. The United States Federal Aviation Administration (FAA) and/or other such regulatory bodies, typically require that the various components meet or exceed particular thresholds. For example, in order to receive FAA certification, structural loads within certain components must be tested and shown to maintain adequate structural margins of safety under various load conditions.

A photolastic stress measurement is a known testing technique in which a component to be tested is coated with a special chemical. When subjected to load, the coating changes, and strains may be viewed through a special optical device. However, during the test, individuals that are conducting, viewing, and monitoring the test are typically in close proximity to the component being tested. As can be appreciated, during a test, artificially excessive forces may be exerted into the component, which increase the risk of a part failure. As such, individuals in the vicinity of the component may be susceptible to injury due to portions of the component being ejected into the testing environment. Additionally, the chemical coating is typically removed after testing, which is typically difficult and costly to do. Moreover, application and removal of the coating may be difficult or impossible in some cases, such as cases where there is limited access to space for the coating. Further, the determined strain in the component under test typically depends on the individual that is monitoring the test, and, as such, may be a subjective determination. Moreover, certain strain conditions may be undetectable through the optical device.

Another known testing method includes the placement of strain gages on a component that is to be tested. However, the strain gages may not be positioned at various areas that are subjected to strains, and, therefore, may be incapable of detecting relevant strains imparted into the component. Also, strain gages tend to provide data at only discrete locations as opposed to continuous data over an area. Moreover, placing strain gages at various areas of components having complex shapes may be costly, and difficult, if not impossible.

US 2002/0034324, in accordance with its abstract, states a three dimensional inspection method for inspecting ball array devices having a plurality of balls, where the ball array device is positioned in an optical system. The inspection method includes the steps of illuminating at least one ball on the ball array device, and disposing a sensor, a first optical element and a second optical element in relation to the ball array device so that the sensor obtains at least two differing views of the at least one ball, the sensor providing an output representing the at least two differing views. The output is processed using a triangulation method to calculate a three dimensional position of the at least one ball with reference to a pre-calculated calibration plane.

WO 01/65861, in accordance with its abstract, states a system and method for recording multiple perspective images. The system may include a camera, a first reflective member, and a second reflective member. The camera is directed at the first reflective member and the second reflective member is preferably positioned around a target such that multiple perspectives of the target reflect from the second reflective member to the first reflective member and to the camera. The camera may then record an image of multiple perspectives of the target. The image recorded by the camera may then be processed and displayed within a viewer device.

### SUMMARY OF THE DISCLOSURE

A need exists for a safe, efficient, cost-effective, accurate, and reliable system and method of monitoring a component (such one having a complex shape) as it is being tested.

With that need in mind, certain embodiments of the present disclosure provide an optical monitoring system for monitoring a component, such as during a test. Certain embodiments of the present disclosure provide an optical monitoring method of monitoring a component. In particular, the present disclosure provides a system and method as set out below.

There is described herein an optical monitoring system for monitoring a component that is being tested by stressing and/or straining the component, the optical monitoring system comprising: a component that is being tested, the component having a region of interest including at least one image correlation feature; an imaging sub-system including a first camera having a first optical path and a second camera having a second optical path, wherein the first and second optical paths include respective first and second direct lines of sight, and wherein the region of interest of the component is outside the first and second direct lines of sight; and a reflector sub-system that alters the first and second optical paths so that the region of interest is within the first and second optical paths.

There is also described herein an optical monitoring method of monitoring a component that is being tested by stressing and/or straining the component, the optical monitoring method comprising: (a) directing first and second direct lines of sight of respective first and second cameras of an imaging sub-system towards a reflector sub-system;(b) altering first and second optical paths that respectively include the first and second direct lines of sight with the reflector sub-system towards a region of interest of the component, wherein the region of interest of the component is outside the first and second direct lines of sight, and wherein the region of interest includes at least one image correlation feature.

### BRIEF DESCRIPTION OF THE DRAWINGS

Figure 1 illustrates a schematic view of an optical monitoring system for monitoring a component that is being tested, according to an embodiment of the present disclosure.
Figure 2 illustrates a schematic view of an optical monitoring system for monitoring a component that is being tested, according to an embodiment of the present disclosure.
Figure 3 illustrates a perspective top front view of an imaging sub-system, according to an embodiment of the present disclosure.
Figure 4 illustrates a simplified top plan view of an optical monitoring system, according to an embodiment of the present disclosure.
Figure 5 illustrates a simplified top plan view of an optical monitoring system, according to an embodiment of the present disclosure.
Figure 6 illustrates a simplified top plan view of an optical monitoring system, according to an embodiment of the present disclosure.
Figure 7 illustrates a simplified top plan view of an optical monitoring system, according to an embodiment of the present disclosure.
Figure 8 illustrates a simplified top plan view of an optical monitoring system, according to an embodiment of the present disclosure.
Figure 9 illustrates a flow chart of a method of monitoring surfaces of a component during a test, according to an embodiment of the present disclosure.

### DETAILED DESCRIPTION OF THE DISCLOSURE

Embodiments of the present disclosure provide an optical monitoring system and method of imaging a component that is being tested. The system and method may be used to monitor the component during a test to measure strains. The system and method may include an imaging sub-system, such as a digital image correlation sub-system including digital cameras. The system and method may include a reflector sub-system including one or more mirrors, lenses, and/or the like. The imaging sub-system is used in conjunction with the reflector sub-system to view confined (for example, not clearly accessible or completely inaccessible) areas of the component that may be otherwise inaccessible by the imaging sub-system by itself. The system and method is configured to view difficult to see areas, as well as larger parts of a structure, to determine strain measurements in a non-contact manner. Embodiments of the present disclosure provide optical systems and methods of measuring strains in a component that is being tested that are cleaner and safer than various other known systems.

Embodiments of the present disclosure provide optical monitoring systems and methods that replace photolastic stress measurement techniques. Embodiments of the present disclosure provide a cost-effective system and method of identifying areas of strain of a component that provide accurate and reliable results. Embodiments of the present disclosure provide an optical system that may include a reflector sub-system that may include one or more mirrors (such as first surface mirrors, double-reflection mirrors, and the like), and/or lenses that are disposed in the optical path of one or more cameras of an imaging sub-system.

Certain embodiments of the present disclosure provide an optical monitoring system that may include an imaging sub-system and a reflector sub-system. The imaging sub-system may include two cameras (such as high quality mini-cameras), each of which has or otherwise provides a separate optical path that leads to an area of interest of a component that is to be tested. In at least one embodiment, both cameras may be trained or focused on the same point of interest but from different angles. In at least one embodiment, a camera angle difference of between 10-30 degrees may exist between the cameras.

The region or area of interest may include an arrangement of optical image correlation features, such as spots or targets. The region or area of interest may include an array of image correlation features (such as dots, lines, or other such markings), or even features within features. The features may be applied to a component through various methods, such as painting, inkjet application, anodization, etching, and/or the like. The features may be directly applied on the component such that the features are not inadvertently damaged or removed during handling or testing (such as by exposure to different test environments and conditions).

The reflector sub-system may include at least one mirror in an optical path of at least one of the cameras. The mirror(s) alters the optical path of the camera. The mirror(s) are used to allow the camera(s) to view in tight spaces, and may allow the camera(s) to be positioned in a suitable or optimal location. In at least one embodiment, the mirrors may be first surface mirrors, particularly if the reflector sub-system includes an odd number of mirrors. In at least one embodiment, the imaging sub-system may use a single camera, such as if there are two optical paths in relation to the camera in which the optical paths are the same overall distance.

The mirrors and cameras may be secured to mounting assemblies such that the cameras and mirror are substantially fixed relative to each other. In at least one embodiment, one or more or the mirrors and/or cameras may be mounted to the component being tested. The reflector sub-system may also include one or more lenses in the optical path(s) in order to focus and/or zoom in on particular areas of the component that is being tested.

Certain embodiments of the present disclosure provide an optical monitoring method that includes acquiring two simultaneous images of a substantially inaccessible portion of interest on a component from varying perspectives. The method may include positioning one or more mirrors within optical paths of cameras. The method may include calibrating and adjusting for camera distortion and mirror distortion from waviness, for example. The calibrating may include reversing any images in order to be compared to various images.

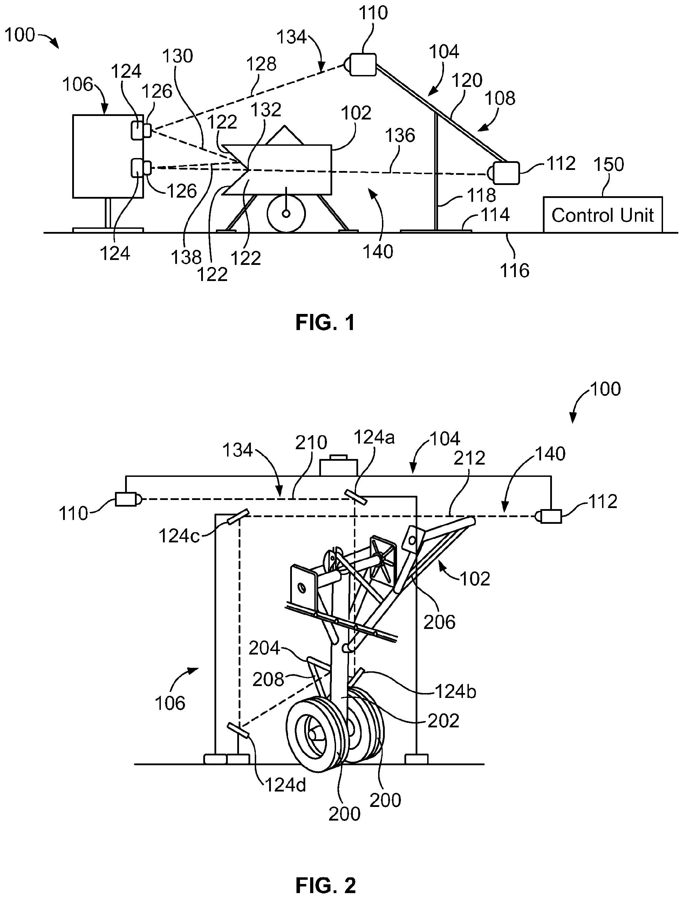

Figure 1 illustrates a schematic view of an optical monitoring system 100 for monitoring a component 102 that is being tested, according to an embodiment of the present disclosure. The optical monitoring system 100 may include an imaging sub-system 104 and a reflector sub-system 106.

The imaging sub-system 104 may include a mounting assembly 108 that securely mounts a first camera and 110 a second camera 112. The mounting assembly 108 may include a base 114 supported on a surface 116 (such as a floor). An extension 118 (such as one or more columns, posts, brackets, and/or the like) that upwardly extends from the base 116 and connects to a cross bar 120. The first and second cameras 110 and 112 may be secured to portions of the cross bar 120. As shown, the first and second cameras 110 and 112 may be spaced apart from one another on the cross bar 120, such as at terminal ends. The cameras 110 and 112 are spaced apart from one another on the cross bar 120, and angled toward one another (such as at an angle that is 60-80 degrees with respect to a longitudinal axis of the cross bar 120) in order to facilitate binocular three-dimensional viewing of the component 102.

Each of the cameras 110 and 112 may be a digital camera. The cameras 110 and 112 may be the same type of camera. Optionally, the cameras 110 and 112 may be different from one another. In at least one embodiment, the cameras 110 and 112 may be digital mini cameras, lipstick cameras, board cameras, handheld cameras, and/or the like.

As shown, the component 102 may include various complex surfaces 122 that may not be in a direct line of sight of either of the cameras 110 and 112. Accordingly, the cameras 110 and 112 may be unable to directly image the surfaces 122. The component 102 may be a large, bulky, complex assembly (such as a landing gear assembly) that may be difficult to manipulate and move within a testing environment. Further, the component 102 may be safely positioned in one or more orientations. However, the component 102 may be unable to be turned upside down without damaging portions thereof. As such, the surfaces 122 may be unable to be directly exposed to the cameras 110 and 112.

The reflector sub-system 106 is used in conjunction and cooperates with the imaging sub-system 104 so that optical paths of the cameras 110 and 112 connect to one or more of the surfaces 122 that would otherwise be inaccessible (or not clearly accessible) by the cameras 110. The reflector sub-system 106 may include one or more mirrors 124 and/or one or more lenses 126. The reflector sub-system 106 may additionally or alternatively include one or more borescope(s), fiber optics, light guide(s), light pipe(s), and/or the like. For example, as shown in Figure 1, the reference numerals 126 may alternatively, or additionally, be borescopes, fiber optics, light guides, light pipes, and/or the like. The mirrors 124 may be first surface mirrors, double-reflection mirrors, and/or the like. Optionally, the reflector sub-system 106 may not include the lenses 126. In at least one other embodiment, the reflector sub-system 106 may include the lenses 126, but not the mirrors 124.

The mirrors 124 and the lenses 126 are disposed within an optical path of the cameras 110 and 112. For example, a mirror 124 and a lens 126 may be disposed within a direct line of sight 128 of the first camera 110. The mirror 124 redirects light to provide a reflected, indirect line of sight 130 onto a surface 132 of the component 102 that is otherwise not in the direct line of sight 128 of the first camera 110. The lens 126 may clarify the focal point of the first camera 110 onto the surface 132.

The mirror 124 is within an optical path 134 of the first camera 110, and bends, extends, or otherwise alters the optical path 134. The optical path 134 includes the direct line of sight 128 and the indirect line of sight 130 (as reflected off the mirror 124) to the surface 132 that would otherwise be inaccessible by the direct line of sight 128 alone. The lens 126 may focus or zoom the first camera 110 with respect to the surface 132. Optionally, the lens 126 may not be used.

Similarly, a mirror 124 and a lens 126 may be disposed within a direct line of sight 136 of the second camera 111. The mirror 124 redirects light to provide a reflected, indirect line of sight 138 onto the surface 132 of the component 102 that is otherwise not in the direct line of sight 136 of the second camera 112. The lens 126 may enhance the focal point of the second camera 112 into the surface 132.

The mirror 124 is within an optical path 140 of the second camera 112, and bends, extends, or otherwise alters the optical path 140. The optical path 140 includes the direct line of sight 138 and the indirect line of sight 138 (as reflected off the mirror 124) to the surface 132 that would otherwise be inaccessible by the direct line of sight 138 alone. The lens 126 may focus or zoom the second camera 112 with respect to the surface 132. Optionally, the lens 126 may not be used.

The optical paths 134 and 140 may both be trained or otherwise focused on the same surface 132 of the component 102. For example, both of the optical paths 134 and 140 of the cameras 110 and 112 may be trained or focused on the same point of interest (for example, the surface 132), but from different angles. In at least one embodiment, the first and second cameras 110 and 112 may be positioned at angles that differ between 10-30 degrees. Optionally, the camera angle difference may be less than 10 degrees or greater than 30 degrees. Alternatively, the optical paths 134 and 140 may each be trained or focused on a different portion of the component 102.

In at least one other embodiment, instead of two separate and distinct cameras, the imaging sub-system 104 may include a single camera, such as the camera 110 or 112. In this embodiment, the two optical paths 134 and 140 may emanate from the same camera 110 or 112. Each of the optical paths 134 and 140 may be the same overall distance.

As shown, the reflector sub-system 106 may include two mirrors 124, each of which is disposed within a separate and distinct optical path 134 and 140 (and, as such, alter the optical paths 134 and 140). Optionally, the reflector sub-system 106 may include a single mirror that is disposed within both of the optical paths 134 and 140. In at least one other embodiment, the reflector sub-system 106 may include multiple mirrors within each of the optical paths 134 and 140. Multiple mirrors may be used to alter the optical paths 134 and 140 to provide imaging access to confined areas of the component 102. For example, multiple mirrors may be used to re-direct an optical path 134 or 140 down, up, and/or laterally to provide imaging access to an otherwise inaccessible area of the component 102.

The mirrors 124, the lenses 126, and the cameras 110, 112 may be secured to mounting assemblies. The cameras 110 and 112 may be substantially fixed relative to each other. In at least one embodiment, one or more or the mirrors 124, lenses 126, and/or the cameras 110, 112, may be mounted to the component 102.

As described above, the optical monitoring system 100 is configured to monitor the component 102 during a test, such as a structural loads test that is configured to stress and/or strain the component 102. The optical monitoring system 100 includes the imaging sub-system 104, which may include the first and second cameras 110 and 112 that provide the first and second optical paths 134 and 140. The first and second optical paths 134 and 140 include the respective first and second direct lines of sight 128 and 136. The surface 132 is a region of interest that may be outside of (or otherwise not within) the first and second direct lines of sight 128 and 136. The reflector sub-system 106 alters the first and second optical paths 134 and 140 so that the surface 132 is within the first and second optical paths 134 and 140.

The imaging sub-system 104 may be a digital image correlation system. Digital image correlation employs tracking and image registration techniques for accurate two-dimensional and three-dimensional measurements of changes in images. As such, the imaging sub-system 104 may be used to measure one or more of deformation, displacement, strain, and the like of the component 102 during testing. For example, the component 102 may be subjected to compression testing, and the imaging sub-system 104 is used to monitor strains, stresses, and/or the like of the component 102 during the testing.

In a digital image correlation system, a surface of interest, such as the surface 132, may be painted or otherwise coated with a speckle cluster that includes various features (such as dots, lines, and/or the like). The imaging sub-system 102 is then calibrated with respect to the speckle cluster. For example, before actual testing, the cameras 110 and 112 image the surface 132 having the speckle pattern. A control unit 150 that is in communication with the cameras 110 and 112, such as through a wired or wireless connection, determines a relationship between the various speckles of the speckle cluster and records sizes of the speckles, distances therebetween, and the like, as a baseline measurement.

If an odd number of mirrors 124 of mirrors are used within each optical path 134 and 140, the control unit 150 may digitally invert the received images from the cameras 110 and 112 before calibrating (or as an initial calibration step). That is, an odd number of mirrors reflect a mirror image of the surface 132, as opposed to an actual view of the surface 132. Accordingly, the control unit 150 inverts the image of the surface 132 to ensure that the image of the surface 132 is analyzed by the control unit 150 as the surface 132 actually exists. In at least one other embodiment, if mirrors of sufficient quality are used, the calibration may be performed before disposing the mirrors within the optical paths.

Additionally, the control unit 150 may calibrate images received from the first and second cameras 110 and 112 to accommodate differences in camera imaging quality, focal lengths, and/or the like. For example, the cameras 110 and 112 may be different types of cameras. As such, the control unit 150 may calibrate the images received from the cameras 110 and 112 so that the received images are compatible with one another.

As part of a digital image correlation system, the control unit 150 uses pattern recognition between the original calibrated image of the speckle pattern on the surface 132 to deformed features (for example, facets) as the component 102 is subjected to a test. The control unit 150 calculates displacement and deformation based on the changing nature of the features as compared to the originally calibrated image (that is, the baseline measurement) of the surface 132 before testing.

As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 150 may be or include one or more processors that are configured to control operation of the imaging sub-system 104.

The control unit 150 is configured to execute a set of instructions that are stored in one or more storage elements (such as one or more memories), in order to process data. For example, the control unit 150 may include or be coupled to one or more memories. The storage elements may also store data or other information as desired or needed. The storage elements may be in the form of an information source or a physical memory element within a processing machine.

The set of instructions may include various commands that instruct the control unit 150 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the control unit 150. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 150 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program.

Figure 2 illustrates a schematic view of the optical monitoring system 100 for monitoring the component 102 that is being tested, according to an embodiment of the present disclosure. The component 102 may be a landing gear having various surfaces that are not within a direct line of sight of either of the cameras 110 and 112. The landing gear 102 may include wheels 200 coupled to an extension bracket 202 having various structural supports 204 and 206. A rear underside 208 of the support 204 may not be in a direct line of sight of either of the cameras 110. As such, the reflector sub-system 106 may include a first mirror 124a within the direct line of sight 210 of the camera 110. The first mirror 124a bends or otherwise re-directs the optical path 134 down toward a second mirror 124b, which re-directs the optical path 134 onto the rear underside 208 of the support 204. Similarly, a third mirror 124c is within the direct line of sight 212 of the camera 112. The third mirror 124c bends or otherwise redirects the optical path 140 down toward a fourth mirror 124d, which re-directs the optical path 140 onto the rear underside 208 of the support 204.

More or less mirrors 124 than shown may be used to provide imaging access to a confined area of the landing gear 102 that would otherwise be inaccessible by the direct lines of sight 210 and 212 of the cameras 110 and 112. Additionally, while not shown in Figure 2, lenses may be disposed within the optical paths 134 and 140 to provide increased focus, zoom, and/or the like with respect to the rear underside 208 of the support 204.

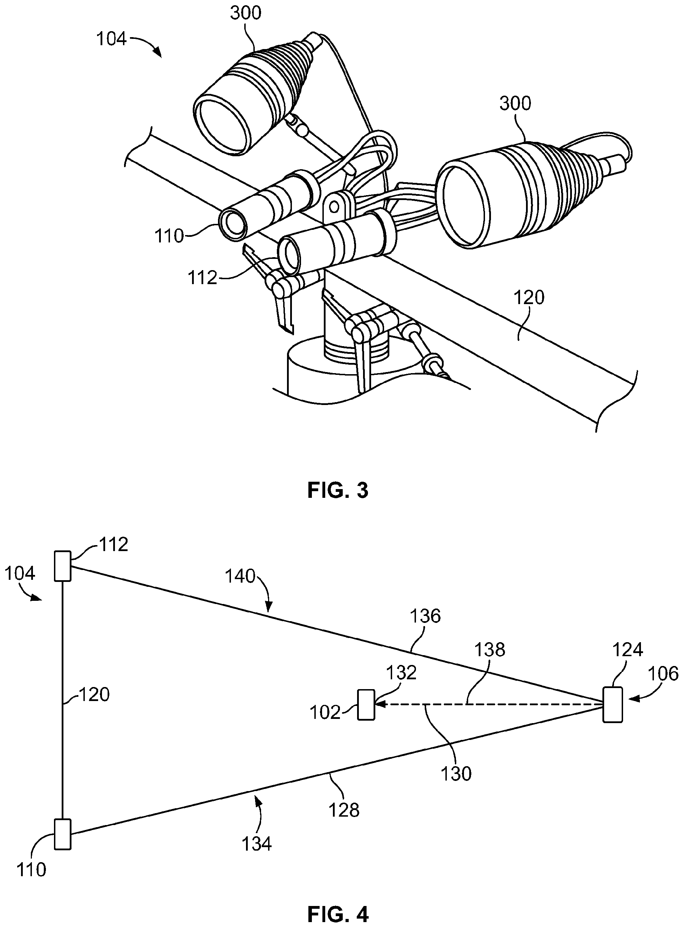

Figure 3 illustrates a perspective top front view of the imaging sub-system 104, according to an embodiment of the present disclosure. The imaging sub-system 104 includes the first and second cameras 110 and 112 secured to the cross bar 120. The cameras 110 and 112 may be angled toward one another, such as at a 10-30 degree angle in relation to a central plane that bisects the imaging sub-system 104. The cameras 110 and 112 may be spaced any distance apart on the cross bar 120. For example, the cameras 110 and 112 may be spaced closer or farther on the cross bar 120 than shown. Additionally, the imaging-sub-system 104 may include one or more lights 300 that are configured to illuminate a component.

Figure 4 illustrates a simplified top plan view of the optical monitoring system 100, according to an embodiment of the present disclosure. As shown, the reflector sub-system 106 may include a single mirror 124 disposed within both the optical paths 134 and 140. Both optical paths 134 and 140 may be trained or otherwise focused on the same surface 132. In this embodiment, because only a single mirror 124 is used, the control unit 150 (shown in Figure 1) may first invert an initial image of the surface 132 from the cameras 110 and 112 before calibration.

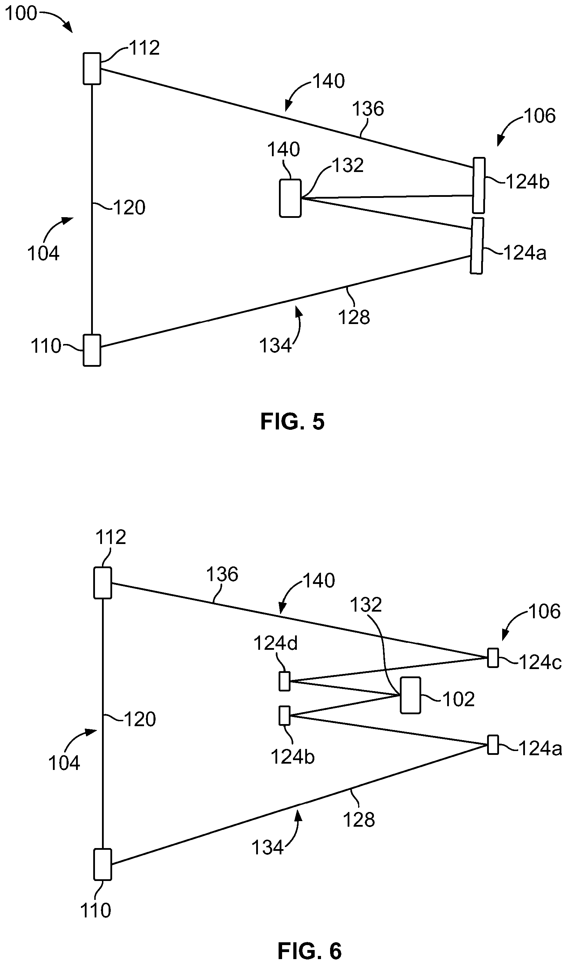

Figure 5 illustrates a simplified top plan view of the optical monitoring system 100, according to an embodiment of the present disclosure. The reflector sub-system 106 may include mirrors 124a and 124b disposed within the respective optical paths 134 and 140. Both optical paths 134 and 140 may be trained or otherwise focused on the same surface 132.

Alternatively, different numbers of mirrors may be disposed within the optical paths 134 and 140. For example, the optical paths 134 and 140 may include more or less mirrors than shown, and the number of mirrors within each optical path 134 and 140 may not be the same. Each optical path 134 and 140 may be the same distance, or may be a different distance. In at least one embodiment, one or more lenses may be disposed within one or both of the optical paths 134 and 140 so that optical paths of different distances may appear the same to the control unit 150 (shown in Figure 1).

Figure 6 illustrates a simplified top plan view of the optical monitoring system 100, according to an embodiment of the present disclosure. The reflector sub-system 106 may include mirrors 124a and 124b disposed within the optical path 134, and mirrors 124c and 124d disposed within the optical path 140. Both optical paths 134 and 140 may be trained or otherwise focused on the same surface 132. The mirrors 124a-124d alter the optical paths 134 and 140 so as to provide access to the surface 132, which may otherwise be inaccessible by direct lines of sight 128 and 136 of the cameras 110 and 112, respectively, such as due to obstructions therebetween. As shown, the mirrors 124a and 124b may be disposed to opposite sides of the component 102, while the mirrors 124c and 124d may be disposed to opposite sides of the component 102.

Alternatively, different numbers of mirrors may be disposed within the optical paths 134 and 140. For example, the optical paths 134 and 140 may include more or less mirrors than shown, and the number of mirrors within each optical path 134 and 140 may not be the same. Each optical path 134 and 140 may be the same distance, or may be a different distance. In at least one embodiment, one or more lenses may be disposed within one or both of the optical paths 134 and 140 so that optical paths of different distances may appear the same to the control unit 150 (shown in Figure 1).

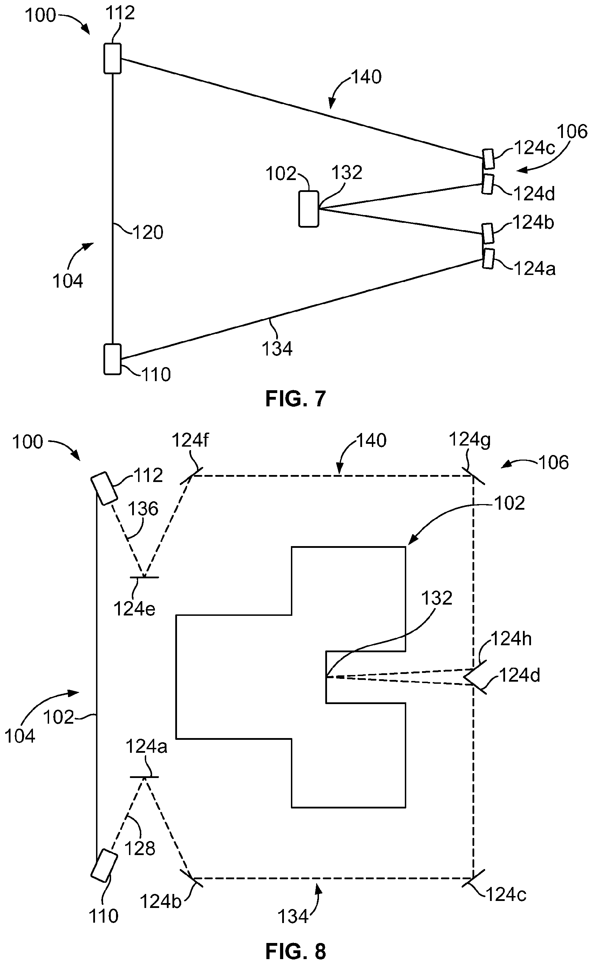

Figure 7 illustrates a simplified top plan view of the optical monitoring system 100, according to an embodiment of the present disclosure. The reflector sub-system 106 may include mirrors 124a and 124b disposed within the optical path 134, and mirrors 124c and 124d disposed within the optical path 140. Both optical paths 134 and 140 may be trained or otherwise focused on the same surface 132. The mirrors 124a-124d alter the optical paths 134 and 140 so as to provide access to the surface 132, which may otherwise be inaccessible by direct lines of sight 128 and 136 of the cameras 110 and 112, respectively, such as due to obstructions therebetween. As shown, the mirrors 124a-d may all be located to one side of the component 102.

Alternatively, different numbers of mirrors may be disposed within the optical paths 134 and 140. For example, the optical paths 134 and 140 may include more or less mirrors than shown, and the number of mirrors within each optical path 134 and 140 may not be the same. Each optical path 134 and 140 may be the same distance, or may be a different distance. In at least one embodiment, one or more lenses may be disposed within one or both of the optical paths 134 and 140 so that optical paths of different distances may appear the same to the control unit 150 (shown in Figure 1).

Figure 8 illustrates a simplified top plan view of the optical monitoring system 100, according to an embodiment of the present disclosure. As shown, the component 102 may include various portions that prevent direct lines of sight 128 and 136 of the cameras 110 and 112 from connecting to a region of interest, such as the surface 132. Accordingly, the reflector sub-system 106 may include a plurality of mirrors 124a, 124b, 124c, and 124d within the optical path 134. The mirrors 124a-d alter the optical path 134 to focus on the surface 132. Similarly, the reflector sub-system 106 may include a plurality of mirrors 124e, 124f, 124g, and 124h within the optical path 140. The mirrors 124e-h alter the optical path 140 to focus on the surface 132. Again, more or less mirrors 124 (and/or lenses) may be disposed within the optical paths 134 and 140.

Referring to Figures 1-8, the mirrors 124 and/or lenses 126 may be separately mounted. For example, the mirrors 124 and or lenses 126 may be mounted to mounting assemblies that are not connected to the component 102. In at least one other embodiment, the mirrors 124 and/or lenses 126 may be mounted to end effectors of robotic arms that may be configured to precisely position the mirrors 124 and/or lenses 126. Optionally, one or more of the mirrors 124 and/or lenses 126 may be mounted directly to a portion of the component 102.

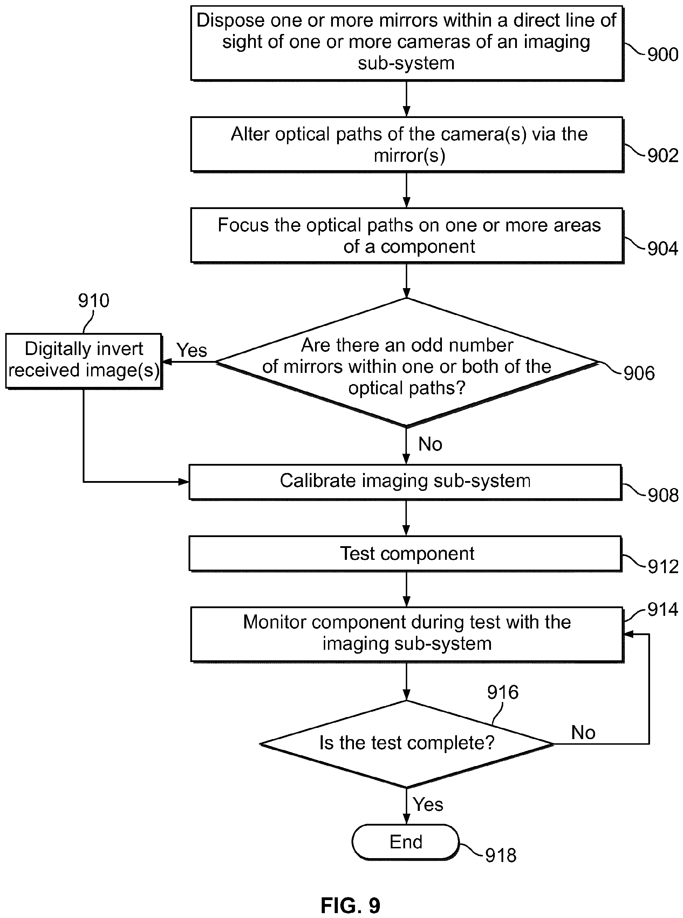

Figure 9 illustrates a flow chart of a method of monitoring surfaces of a component during a test, according to an embodiment of the present disclosure. The method begins at 900, in which one or more mirrors are disposed within a direct line of sight of one or more cameras of an imaging sub-system. At 902, optical paths of the camera(s) are altered via the mirror(s). At 904, the optical paths are focused on one or more areas of a component. The areas of the component may be areas that are otherwise inaccessible or difficult to view through the direct line of sight of the camera(s).

At 906, it is determined whether an odd number of mirrors are within one or both of the optical paths. For example, an individual may input the number of mirrors into the control unit 150 (shown in Figure 1), such as through an input device (for example, a keyboard or touchscreen).

If there is an even number of mirrors within each optical path, the imaging sub-system is calibrated at 908. For example, the control unit 150 may calibrate the imaging sub-system.

If, however, there is an odd number of mirrors within at least one optical path, the received images from the cameras may be first digitally inverted, such as by the control unit 150, at 910. The method then proceeds from 910 to 908, in which the imaging sub-system is then calibrated.

After calibration, the component may then be tested at 912. The component is monitored during the test with the imaging sub-system at 914. At 916, it is determined (such as by the control unit 150) if the test is complete. If the test is not complete, the method returns to 914. If, however, the test is complete, the method proceeds from 916 to 918 in which the method ends.

Referring to Figures 1-9, embodiments of the present disclosure safe, efficient, cost-effective, and reliable systems and methods for monitoring a component during testing.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

## Claims

1. An optical monitoring system for monitoring a component (102) that is being tested by stressing and/or straining the component, the optical monitoring system comprising:
a component (102) that is being tested, the component having a region of interest including at least one image correlation feature;
an imaging sub-system (104) including a first camera (110) having a first optical path and a second camera (112) having a second optical path, wherein the first and second optical paths include respective first and second direct lines of sight, and wherein the region of interest of the component (102) is outside the first and second direct lines of sight; and
a reflector sub-system (106) that alters the first and second optical paths so that the region of interest is within the first and second optical paths.

2. The optical monitoring system of claim 1, wherein the reflector sub-system (106) comprises at least one mirror within the first and second optical paths.

3. The optical monitoring system of claim 1 or 2, wherein the at least one mirror comprises a plurality of mirrors within the first and second optical paths, for example a first mirror within the first optical path and a second mirror within the second optical path and, optionally, a third mirror within the first optical path and a fourth mirror within the second optical path.

4. The optical monitoring system of any of claims 1-3, wherein the reflector sub-system 106 comprises at least one lens within the first and second optical paths, optionally a first lens within the first optical path and a second lens within the second optical path.

5. The optical monitoring system of any of claims 1-4, wherein the imaging sub-system (102, 104) is a digital image correlation imaging sub-system, wherein the first and second cameras (110, 112) are first and second digital cameras that cooperate to provide binocular three-dimensional imaging of the region of interest.

6. The optical monitoring system of any of claims 1-5, wherein the first and second optical paths focus on different portions of the region of interest or on the same portion of the region of interest from respective first and second angles.

7. The optical monitoring system of any of claims 1-6, further comprising a control unit that controls operation of the first and second cameras (110, 112).

8. The optical monitoring system of claim 7, wherein the control unit is configured to invert one or more received images from the first and second cameras (110, 112) before calibrating the first and second cameras (110, 112).

9. An optical monitoring method of monitoring a component (102) that is being tested by stressing and/or straining the component, the optical monitoring method comprising:
directing first and second direct lines of sight of respective first and second cameras (110, 112) of an imaging sub-system (102, 104) towards a reflector sub-system (106);
altering first and second optical paths that respectively include the first and second direct lines of sight with the reflector sub-system (106) towards a region of interest of the component (102), wherein the region of interest of the component (102) is outside the first and second direct lines of sight, and wherein the region of interest includes at least one image correlation feature.

10. The optical monitoring method of claim 9, wherein the altering operation comprises altering the first and second optical paths with at least one mirror of the reflector sub-system (106).

11. The optical monitoring method of claim 9 or 10, wherein the at least one mirror comprises a plurality of mirrors within the first and second optical paths, for example a first mirror within the first optical path and a second mirror within the second optical path, and, optionally, a third mirror within the first optical path and a fourth mirror within the second optical path.

12. The optical monitoring method of any of claims 9-11, wherein the reflector sub-system 106 comprises at least one lens within the first and second optical paths.

13. The optical monitoring method of any of claims 9-12, further comprising imaging the region of interest with the imaging sub-system, wherein the imaging sub-system (102, 104) is a digital image correlation imaging sub-system, wherein the first and second cameras (110, 112) are first and second digital cameras that cooperate to provide binocular three-dimensional imaging of the region of interest.

14. The optical monitoring method of any of claims 9-13, further comprising focusing the first and second optical paths on different portions of the region of interest or on the same portion of the region of interest from respective first and second angles.

15. The optical monitoring method of any of claims 9-14, further comprising inverting one or more received images from the first and second cameras (110, 112) before calibrating the first and second cameras (110, 112).

## Patentansprüche

1. Optisches Überwachungssystem zum Überwachen eines Bauteils (102), das durch Beanspruchung und/oder Dehnung des Bauteils getestet wird, wobei das optische Überwachungssystem umfasst:
ein zu prüfendes Bauteil (102), wobei das Bauteil einen interessierenden Bereich mit mindestens einem Bildkorrelationsmerkmal aufweist;
ein Abbildungs-Subsystem (104), das eine erste Kamera (110) mit einem ersten Strahlengang und eine zweite Kamera (112) mit einem zweiten Strahlengang umfasst, wobei der erste und der zweite Strahlengang jeweils eine erste und eine zweite direkte Sichtlinie umfassen, und wobei der interessierende Bereich des Bauteils (102) außerhalb der ersten und der zweiten direkten Sichtlinie liegt; und
ein Reflektor-Subsystem (106), das den ersten und den zweiten Strahlengang so verändert, dass der interessierende Bereich innerhalb des ersten und des zweiten Strahlengangs liegt.

2. Optisches Überwachungssystem nach Anspruch 1, bei dem das Reflektor-Subsystem (106) mindestens einen Spiegel auf dem ersten und dem zweiten Strahlengang umfasst.

3. Optisches Überwachungssystem nach Anspruch 1 oder 2, bei dem der mindestens eine Spiegel eine Mehrzahl von Spiegeln auf dem ersten und dem zweiten Strahlengang umfasst, beispielsweise einen ersten Spiegel auf dem ersten Strahlengang und einen zweiten Spiegel auf dem zweiten Strahlengang, und optional einen dritten Spiegel auf dem ersten Strahlengang und einen vierten Spiegel auf dem zweiten Strahlengang.

4. Optisches Überwachungssystem nach einem der Ansprüche 1-3, bei dem das Reflektor-Subsystem 106 mindestens eine Linse auf dem ersten und dem zweiten Strahlengang umfasst, optional eine erste Linse auf dem ersten Strahlengang und eine zweite Linse auf dem zweiten Strahlengang.

5. Optisches Überwachungssystem nach einem der Ansprüche 1-4, bei dem das Abbildungs-Subsystem (102, 104) ein digitales Bildkorrelations-Abbildungs-Subsystem ist, in dem die erste und die zweite Kamera (110, 112) eine erste und eine zweite Digitalkamera sind, die zusammenwirken, um eine binokulare dreidimensionale Abbildung des interessierenden Bereichs zu liefern.

6. Optisches Überwachungssystem nach einem der Ansprüche 1-5, bei dem der erste und der zweite Strahlengang aus einem ersten bzw. einem zweiten Winkel auf unterschiedliche Teile des interessierenden Bereichs oder auf denselben Teil des interessierenden Bereichs fokussieren.

7. Optisches Überwachungssystem nach einem der Ansprüche 1-6, das ferner eine Steuereinheit umfasst, die den Betrieb der ersten und zweiten Kamera (110, 112) steuert.

8. Optisches Überwachungssystem nach Anspruch 7, bei dem die Steuereinheit konfiguriert ist, um ein oder mehrere empfangene Bilder von der ersten und der zweiten Kamera (110, 112) zu invertieren, bevor die erste und die zweite Kamera (110, 112) kalibriert werden.

9. Optisches Überwachungsverfahren zum Überwachen eines Bauteils (102), das durch Beanspruchung und/oder Dehnung des Bauteils getestet wird, wobei das optische Überwachungsverfahren umfasst:
Richten einer ersten und einer zweiten direkten Sichtlinie einer ersten bzw. einer zweiten Kamera (110, 112) eines Abbildungs-Subsystems (102, 104) auf ein Reflektor-Subsystem (106);
Ändern eines ersten und eines zweiten Strahlengangs, die die erste bzw. die zweite direkte Sichtlinie enthalten, mit dem Reflektor-Teilsystem (106) in Richtung eines interessierenden Bereichs der Komponente (102), wobei der interessierende Bereich der Komponente (102) außerhalb der ersten und der zweiten direkten Sichtlinie liegt und wobei der interessierende Bereich mindestens ein Bildkorrelationsmerkmal enthält.

10. Optisches Überwachungsverfahren nach Anspruch 9, bei dem der Vorgang des Änderns das Ändern des ersten und des zweiten Strahlengangs mit mindestens einem Spiegel des Reflektor-Subsystems (106) umfasst.

11. Optisches Überwachungsverfahren nach Anspruch 9 oder 10, bei dem der mindestens eine Spiegel eine Mehrzahl von Spiegeln auf dem ersten und dem zweiten Strahlengang umfasst, beispielsweise einen ersten Spiegel auf dem ersten Strahlengang und einen zweiten Spiegel auf dem zweiten Strahlengang, und optional einen dritten Spiegel auf dem ersten Strahlengang und einen vierten Spiegel auf dem zweiten Strahlengang.

12. Optisches Überwachungsverfahren nach einem der Ansprüche 9-11, bei dem das Reflektor-Subsystem 106 mindestens eine Linse auf dem ersten und dem zweiten Strahlengang umfasst.

13. Optisches Überwachungsverfahren nach einem der Ansprüche 9-12, das ferner das Abbilden des interessierenden Bereichs mit dem Abbildungs-Subsystem umfasst, wobei das Abbildungs-Subsystem (102, 104) ein digitales Bildkorrelations-Abbildungs-Subsystem ist, in dem die erste und die zweite Kamera (110, 112) eine erste und eine zweite Digitalkamera sind, die zusammenwirken, um eine binokulare dreidimensionale Abbildung des interessierenden Bereichs zu liefern.

14. Optisches Überwachungsverfahren nach einem der Ansprüche 9-13, das ferner das Fokussieren des ersten und des zweiten Strahlengangs auf unterschiedliche Teile des interessierenden Bereichs oder auf denselben Teil des interessierenden Bereichs aus einem ersten bzw. einem zweiten Winkel umfasst.

15. Optisches Überwachungsverfahren nach einem der Ansprüche 9-14, das ferner das Invertieren eines oder mehrerer von der ersten und der zweiten Kamera (110, 112) empfangener Bilder vor dem Kalibrieren der ersten und zweiten Kamera (110, 112) umfasst.

## Revendications

1. Système de surveillance optique pour surveiller un composant (102) qui est testé en sollicitant et/ou en contraignant le composant, le système de surveillance optique comprenant :
un composant (102) qui est testé, le composant ayant une région d'intérêt comprenant au moins une caractéristique de corrélation d'image ;
un sous-système d'imagerie (104) comprenant une première caméra (110) ayant un premier trajet optique et une seconde caméra (112) ayant un second trajet optique, dans lequel les premier et second trajets optiques comprennent des première et seconde lignes de visée directes respectives, et dans lequel la région d'intérêt du composant (102) est à l'extérieur des première et seconde lignes de visée directes ; et
un sous-système de réflecteur (106) qui modifie les premier et second trajets optiques de sorte que la région d'intérêt soit à l'intérieur des premier et second trajets optiques.

2. Système de surveillance optique selon la revendication 1, dans lequel le sous-système de réflecteur (106) comprend au moins un miroir dans les premier et second trajets optiques.

3. Système de surveillance optique selon la revendication 1 ou 2, dans lequel le au moins un miroir comprend une pluralité de miroirs à l'intérieur des premier et second trajets optiques, par exemple un premier miroir à l'intérieur du premier trajet optique et un deuxième miroir à l'intérieur du second trajet optique et, facultativement, un troisième miroir à l'intérieur du premier trajet optique et un quatrième miroir à l'intérieur du second trajet optique.

4. Système de surveillance optique selon l'une quelconque des revendications 1 à 3, dans lequel le sous-système de réflecteur (106) comprend au moins une lentille à l'intérieur des premier et second trajets optiques, facultativement une première lentille à l'intérieur du premier trajet optique et une seconde lentille à l'intérieur du second trajet optique.

5. Système de surveillance optique selon l'une quelconque des revendications 1 à 4, dans lequel le sous-système d'imagerie (102, 104) est un sous-système d'imagerie à corrélation d'images numériques, dans lequel les première et seconde caméras (110, 112) sont des première et seconde caméras numériques qui coopèrent pour fournir une imagerie binoculaire en trois dimensions de la région d'intérêt.

6. Système de surveillance optique selon l'une quelconque des revendications 1 à 5, dans lequel les premier et second trajets optiques se focalisent sur des parties différentes de la région d'intérêt ou sur la même partie de la région d'intérêt depuis des premier et second angles respectifs.

7. Système de surveillance optique selon l'une quelconque des revendications 1 à 6, comprenant en outre une unité de commande qui commande le fonctionnement des première et seconde caméras (110, 112).

8. Système de surveillance optique selon la revendication 7, dans lequel l'unité de commande est configurée pour inverser une ou plusieurs images reçues depuis les première et seconde caméras (110, 112) avant d'étalonner les première et seconde caméras (110, 112).

9. Procédé de surveillance optique pour surveiller un composant (102) qui est testé en sollicitant et/ou en contraignant le composant, le procédé de surveillance optique comprenant les étapes consistant à :
diriger des première et seconde lignes de visée directes de première et seconde caméras respectives (110, 112) d'un sous-système d'imagerie (102, 104) vers un sous-système de réflecteur (106) ;
modifier des premier et second trajets optiques qui comprennent respectivement les première et seconde lignes de visée directes avec le sous-système de réflecteur (106) vers une région d'intérêt du composant (102), dans lequel la région d'intérêt du composant (102) est à l'extérieur des première et seconde lignes de visée directes, et dans lequel la région d'intérêt comprend au moins une caractéristique de corrélation d'images.

10. Procédé de surveillance optique selon la revendication 9, dans lequel l'opération de modification comprend une modification des premier et second trajets optiques avec au moins un miroir du sous-système de réflecteur (106).

11. Procédé de surveillance optique selon la revendication 9 ou 10, dans lequel le au moins un miroir comprend une pluralité de miroirs à l'intérieur des premier et second trajets optiques, par exemple un premier miroir à l'intérieur du premier trajet optique et un deuxième miroir à l'intérieur du second trajet optique, et, facultativement, un troisième miroir à l'intérieur du premier trajet optique et un quatrième miroir à l'intérieur du second trajet optique.

12. Procédé de surveillance optique selon l'une quelconque des revendications 9 à 11, dans lequel le sous-système de réflecteur (106) comprend au moins une lentille à l'intérieur des premier et second trajets optiques.

13. Procédé de surveillance optique selon l'une quelconque des revendications 9 à 12, comprenant en outre une imagerie de la région d'intérêt avec le sous-système d'imagerie, dans lequel le sous-système d'imagerie (102, 104) est un sous-système d'imagerie par corrélation d'images numériques, dans lequel les première et seconde caméras (110, 112) sont des première et seconde caméras numériques qui coopèrent pour fournir une formation d'image binoculaire en trois dimensions de la région d'intérêt.

14. Procédé de surveillance optique selon l'une quelconque des revendications 9 à 13, comprenant en outre une focalisation des premier et second trajets optiques sur différentes parties de la région d'intérêt ou sur la même partie de la région d'intérêt à partir de premier et second angles respectifs.

15. Procédé de surveillance optique selon l'une quelconque des revendications 9 à 14, comprenant en outre une inversion d'une ou plusieurs images reçues en provenance des première et seconde caméras (110, 112) avant d'étalonner les première et seconde caméras (110, 112).
